# EUROPEAN PATENT SPECIFICATION

(11) **EP 3 111 579 B1**
(45) Date of publication and mention of the grant of the patent: **21.02.2018**
(21) Application number: 14883615.8
(22) Date of filing: 26.02.2014
(51) Int. Cl.: H04L 1/16, H04L 1/18

(54) **METHOD AND APPARATUS FOR TRIGGERING ACKNOWLEDGEMENT STATUS REPORT IN WIRELESS COMMUNICATIONS SYSTEM**
VERFAHREN UND VORRICHTUNG ZUR AUSLÖSUNG VON BESTÄTIGUNGSSTATUSBERICHTEN IN EINEM DRAHTLOSKOMMUNIKATIONSSYSTEM
PROCÉDÉ ET APPAREIL DE DÉCLENCHEMENT D'UN RAPPORT D'ÉTAT D'ACCUSÉ DE RÉCEPTION DANS UN SYSTÈME DE COMMUNICATION SANS FIL

(43) Date of publication of application: 04.01.2017
(73) Proprietor: MediaTek Inc., Hsin-Chu 300 (TW)
(72) Inventor: YANG, Shu-Huei, New Taipei City 220 (TW)
(74) Representative: 2K Patentanwälte Blasberg Kewitz & Reichel
(86) International application number: PCT/CN2014/072578
(87) International publication number: WO 2015/127608

(56) References cited:
- CN-A- 101 155 013
- CN-A- 101 217 346
- US-A1- 2006 013 257
- US-A1- 2011 041 024
- US-A1- 2012 201 151
- US-A1- 2014 040 451
- ZTE: "RLC-AM Status prohibit", 3GPP DRAFT; R2-080032, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080108, 8 January 2008 (2008-01-08), XP050137932, [retrieved on 2008-01-08]

## Description

### FIELD OF INVENTION

Aspects of the present invention relate generally to wireless communications systems, and more particularly to methods and apparatuses for triggering an acknowledgement status report.

### BACKGROUND OF THE INVENTION

The Radio Link Control (RLC) protocol has been standardized in the 3rd Generation Partnership Project (3GPP) specification TS. 25.322. There have been established three types of RLC entities with a different working methodology. The three types are: Transparent Mode (TM), Unacknowledged Mode (UM), and Acknowledged Mode (AM) RLC entities. The two first entities do not handle retransmissions in contrast with the third, the Acknowledged Mode (AM) RLC, which deploys a window based system to retransmit lost packets. In the Automatic Repeat Request (ARQ) in the AM, the reliability of data transmission is ensured by an RLC receiver transmitting a status report to a RLC transmitter, and the RLC transmitter determining which Protocol Data Units (PDUs) have been acknowledged to be received by the RLC receiver and which PDUs or PDU segments require retransmitting according to an acknowledgement sequence number (ACK_SN) where the status report cuts off (ACK_SN) in the status report and negative acknowledgement sequence numbers (NACK_ SN) of packets which are not received before the ACK_SN.

At present, the process for triggering a status report in the AM involves two timers, both of which are used in a RLC data transmission receiver. The first one is a reordering timer (Timer_Reordering), which is used to detect a loss condition of bottom layer data, and a status report is transmitted to an RLC transmitter when the Timer_Reordering is time-out. The second one is a status prohibiting timer (Timer_StatusProhibit), which is used to limit a frequency at which the status report is transmitted, i.e., the time for twice transmitting the status report should satisfy a certain time interval. There are two modes for triggering the status report: 1) the RLC transmitter performing the triggering in a polling mode; and 2) the RLC receiver detecting that the reception of the PDU has failed (the Timer_Reordering is time-out).

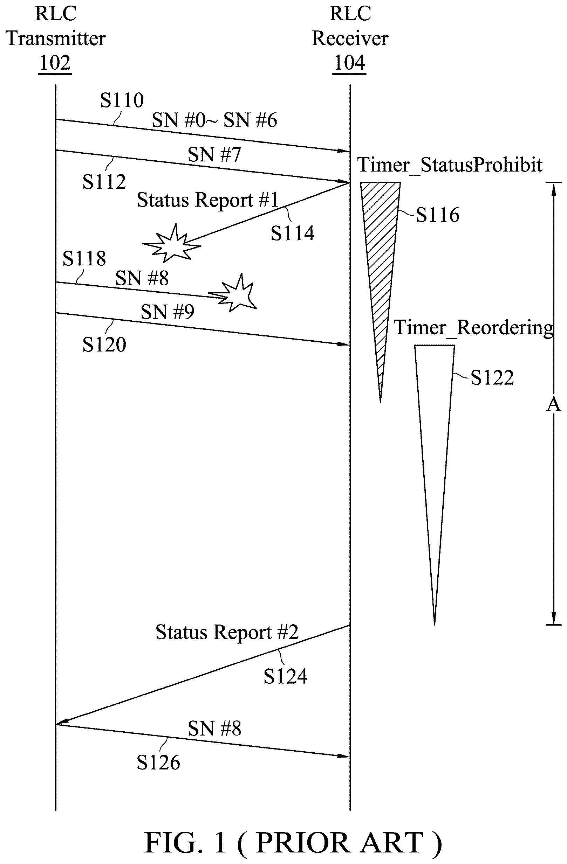

FIG. 1 illustrates a schematic diagram of a prior art procedure for triggering a status report. As shown in FIG. 1, a RLC transmitter 102 transmits at least one protocol data unit (PDU) to a RLC receiver 104 (S110). When the RLC receiver 104 receives the PDU with SN #7 including a poll bit (S112), the RLC receiver 104 will transmit the status report #1 to RLC transmitter 102 (S114) and trigger the Timer_StatusProhibit (S116) immediately. Since the status report #1 is missed (S114), the RLC transmitter 102 continues transmitting the segment with SN #8 (S118) and the segment with SN #9 including a poll bit (S120). When the RLC receiver 104 detects that the PDUs did not arrive in order, the RLC receiver 104 will immediately trigger the Timer_Reordering (S122). When the Timer_StatusProhibit and the Timer_Reordering are time-out, the RLC receiver 104 can transmit the status report #2 (S124) to the RLC transmitter 102 to request the segment with SN #8. In this case, since when the Timer_Reordering is time-out, an update of the VR(MS) and transmission of the status report will be triggered, wherein the VR(MS) is used to identify a cut-off location of the constructed status report in a data receiving window, i.e., a value of the above ACK_SN, and the transmission of the status report must be triggered after the update of the VR(MS). In addition, the triggering of the status report is not unlimited at all, but is required to satisfy a certain transmission interval.

It can be seen from the above discussion that the transmission of a packet in the AM should be acknowledged by a status report. As a Hybrid Automatic Repeat Request (HARQ) of the bottom layer has a limitation on the number of times for retransmitting the loss packets, there is no mechanism for ensuring that the status report per se will be received at the RLC layer, and the triggering of the status report twice is required to satisfy a certain time interval (the standby time A). Therefore, if the status report is lost at the bottom layer, that is, the packet retransmission of the status report is unsuccessful, the retransmission will be implemented only when the status report is triggered the next time.

However, in certain conditions of the Acknowledged Mode (AM), the acknowledgement of the status report by an upper layer is necessary, which is primarily represented in the condition that the receiving window is about to be filled up. When the receiving window stalls, the transmitting window also necessarily has stalled. At this time, if the receiver triggers the status reports but the status reports is lost at the lower layer, the transmitter is requested to retransmit the corresponding PDUs only when a new round of status reports are triggered.

Therefore, it would be desirable to provide techniques to reduce or avoid the stoppage of a receiving window due to the receiving window of the receiver being filled up and increase the packet switch (PS) throughput.

US 2006 001 325 7 A relates to methods and systems for use in a communication system to selectively delay transmitting a second negative acknowledgement (NAK) after an initial NAK has already been sent requesting retransmission of a corrupted packet. The receiving entity initiates a NAK prohibit timer associated with a specific NAK which prevents status reports to transmitting entity from including a retransmission of the specific NAK until the timer expires. However, US 2006 001 325 7 A fails to disclose the distinguishing features in the characterizing part of claim 1.

US 2012 020 115 1 A relates to Layer 2 ACK And NACK Status Reporting. A second timer is started upon sending a negative acknowledge status indicator. Sending of negative acknowledge status indicators is inhibited while the second timer is running, and uninhibited/resumed upon expiry of the second timer. A first timer is started upon sending an acknowledge status indicator. Sending of acknowledge status indicators is inhibited while the first timer is running, and un-inhibited/resumed upon expiry of the first timer. The timer durations may be related but operation of the first timer and the second timer is independent of one another. In a specific example the first timer is an ACK status prohibit timer, the second timer is a NACK status prohibit timer, the acknowledge status indicator is a status PDU with ACK super-field, and the negative acknowledge status indicator is a status PDU with List, Bitmap, Relative List super-field. However, US 2012 020 115 1 A fails to disclose the distinguishing features in the characterizing part of claim 1.

### SUMMERY OF THE INVENTION

A detailed description is given in the following embodiments with reference to the accompanying drawings.

Accordingly, the problem to be solved is to reduce or avoid the stoppage of a receiving window.

This problem is solved by a method for triggering an acknowledgement status report as claimed by claim 1 and by an apparatus for triggering an acknowledgement status report as claimed by claim 4. Further advantageous embodiments are the subject-matter of the dependent claims.

In one exemplary embodiment, the invention is directed to a method for triggering an acknowledgement status report. The method comprises: receiving at least one protocol data unit (PDU); triggering a status prohibit timer when transmitting a first status report; triggering a reordering timer when detecting that the received PDUs do not arrive in order; transmitting a second status report when the reordering timer is time-out or stopped; and triggering an acknowledgement (ACK) status report when a condition is met no matter whether the reordering timer is running or the status prohibit timer is running. The condition is met when the number of the received PDUs reaches a predefined threshold, and the ACK status report indicates a maximum acknowledgement sequence number ACK_LSN, and the ACK_LSN represents the sequence number following the received PDU with the highest sequence number.

In one exemplary embodiment, the invention is directed to an apparatus for triggering an acknowledgement status report. The apparatus comprises a radio frequency (RF) unit and a processor operatively coupled with the RF unit. The RF unit is configured to receive and transmit a radio signal. The processor has a radio link control (RLC) entity and is configured to: receiving at least one protocol data unit (PDU); triggering a status prohibit timer when transmitting a first status report; triggering a reordering timer when detecting that the received PDUs do not arrive in order; transmitting a second status report when the reordering timer is time-out or stopped; triggering an acknowledgement (ACK) status report when a condition is met no matter no matter whether the reordering timer is running or the status prohibit timer is running. The condition is met when the number of the received PDUs reaches a predefined threshold, and the ACK status report indicates a maximum acknowledgement sequence number ACK_LSN, and the ACK_LSN represents the sequence number following the received PDU with the highest sequence number.

In one exemplary embodiment, the invention is directed to a non-transitory computer-readable medium comprising a computer program, used to execute the method for triggering an acknowledgement status report.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
FIG. 1 illustrates a schematic diagram of a prior art procedure for triggering a status report.
FIG. 2 is a network architecture of a long term evolution (LTE) system which is the mobile communications system.
FIG. 3 is an architecture of a radio interface protocol control plane between a terminal and an E-UTRAN based upon the 3GPP radio access network standard.
FIG. 4 is an architecture of a radio interface protocol user plane between a terminal and an E-UTRAN based upon the 3GPP radio access network standard.
FIG. 5 is schematic diagram illustrating a method for triggering an acknowledgement status report according to an embodiment of the invention.
FIG. 6 is a flow diagram illustrating a method for triggering an acknowledgement status report according to an embodiment of the present invention.
FIG. 7 is a block diagram illustrating a wireless communications system to implement an embodiment of the present invention.

### DETAILED DESCRIPTION

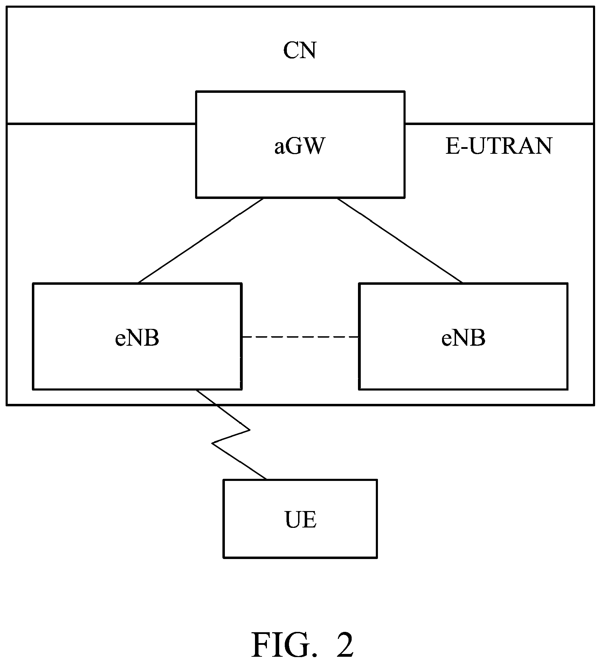

Several exemplary embodiments of the present disclosure are described with reference to FIGS. 2 through 7, which generally relate to a method and an apparatus for triggering acknowledgement status reports. It is to be understood that the following disclosure provides various embodiments as examples for implementing different features of the present disclosure. Specific examples of components and arrangements are described in the following to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

FIG. 2 is a network architecture of a long term evolution (LTE) system which is the mobile communications system that has evolved from the existent UMTS system and a basic standardization therefor is undergoing in 3GPP.

The LTE network may be divided into evolved UMTS terrestrial radio access network (E-UTRAN) and core network (CN). The E-UTRAN includes a terminal (User Equipment; UE), a base station (Evolved Node B; eNB), and an access gateway (aGW) located at the end of the network to be connected to an external network. The aGW may be divided into a portion handling user traffic and a portion processing control traffic. Here, a new interface may be used for the communication between the aGW for processing the user traffic and the aGW for processing the control traffic. One or more cells may exist in one eNB. An interface for transmission of the user traffic or control traffic may be used between eNBs. The CN may include an aGW, a node for a user registration of other UEs and the like. An interface may be used to identify the E-UTRAN and CN.

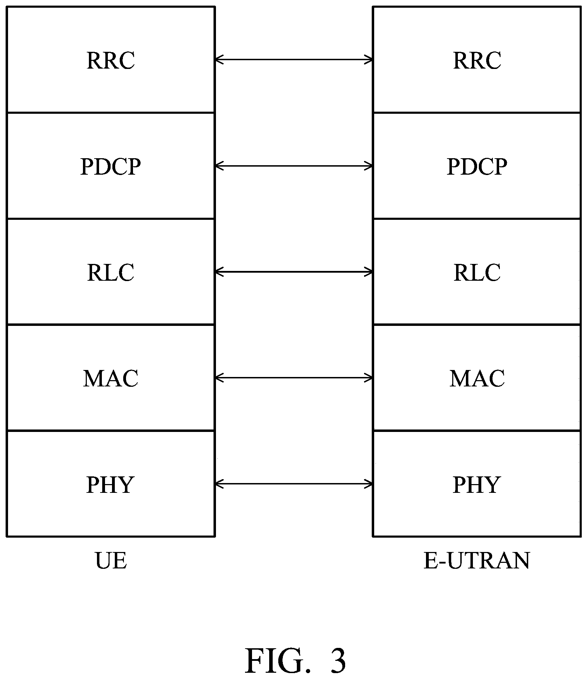

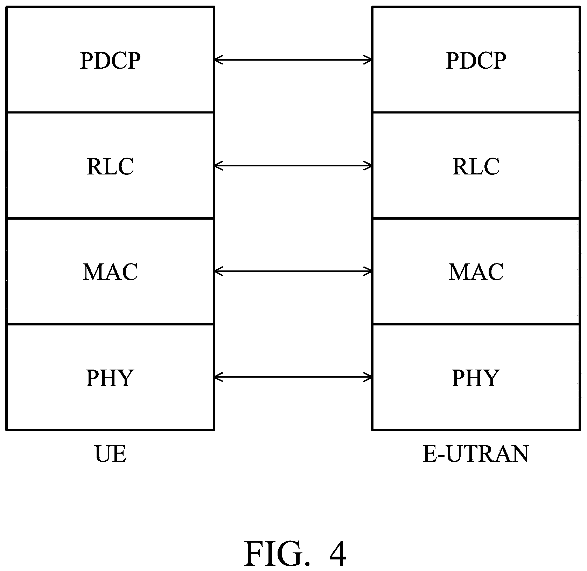

FIG. 3 is an architecture of a radio interface protocol control plane between a terminal and an E-UTRAN based upon the 3GPP radio access network standard, and FIG. 4 is an architecture of a radio interface protocol user plane between a terminal and an E-UTRAN based upon the 3GPP radio access network standard.

Hereinafter, the architecture of radio interface protocols between the terminal and the E-UTRAN will be described with reference to FIGS. 3 and 4.

The radio interface protocol has horizontal layers comprising a physical layer, a data link layer and a network layer, and has vertical planes comprising a user plane for transmitting data information and a control plane for transmitting a control signal. The protocol layers can be divided into a first layer (L1), a second layer (L2) and a third layer (L3) based on three lower layers of an Open System Interconnection (OSI) standard model widely known in communications systems. Such radio interface protocols may exist as a pair between the terminal and the E-UTRAN, to manage data transmissions over interfaces.

Hereinafter, each layer in the radio protocol control plane in FIG. 3 and the radio protocol user plane in FIG. 4 will be described.

A first layer, as a physical (PHY) layer, provides an information transfer service to an upper layer using a physical channel. The physical layer is connected to its upper layer, called a Medium Access Control (MAC) layer, via a transport channel. The MAC layer and the physical layer exchange data via the transport channel. Here, the transport channels may be divided into a dedicated transport channel and a common transport channel, depending on whether the transport channel is shared. Data is transferred via a physical channel between different physical layers, namely, between the physical layer of a transmitting side and the physical layer of a receiving side.

Various layers exist in the second layer. First, a medium access control (MAC) layer serves to map different logical channels to different transport channels, and also to perform a logical channel multiplexing for mapping several logical channels to one transport channel. The MAC layer is connected to an upper radio link control (RLC) layer via a logical channel. Logical channels are divided according to a type of information to be transmitted into a control channel for transmitting control plane information and a traffic channel for transmitting user plane information.

The RLC layer of the second layer manages segmentation and concatenation of data received from an upper layer to appropriately adjust data size such that a lower layer can send data over an interface. Also, the RLC layer provides three operation modes, including a transparent mode (TM), an un-acknowledged mode (UM) and an acknowledged mode (AM), so as to guarantee various quality of service (QoS) requirements of each radio bearer (RB). In particular, the RLC layer operating in the AM mode (hereinafter, referred to as AM RLC layer) performs a retransmission using an automatic repeat and request (ARQ) function for a reliable data transmission.

A packet data convergence protocol (PDCP) layer located at the second layer is used to efficiently transmit IP packets, such as IPv4 or IPv6, on a radio interface with a relatively narrow bandwidth. For this purpose, the PDCP layer reduces the size of an IP packet header which is relatively large in size and includes unnecessary control information. Accordingly, only necessary information can be included in the header part of data for transmission, so as to increase transmission efficiency of a radio interface.

A radio resource control (RRC) layer located at the lowermost portion of the third layer is only defined in the control plane. The RRC layer controls logical channels, transport channels and physical channels in relation to configuration, re-configuration and release of Radio Bearers (RBs). Here, the RB denotes a logical path that the L2 layer provides for data transmission between the terminal and the UTRAN. In general, the establishment of the RB refers to stipulating the characteristics of protocol layer and channel required for providing a specific service, and setting the respective detailed parameters and operation methods. The RBs are divided into a signaling RB (SRB) and a data RB (DRB). The SRB is used as a path for transmission of RRC messages in the C-plane, while the DRB is used as a path for transmissions of user data in the U-plane.

Hereinafter, the RLC layer will be described in more detail. The RLC layer provides three modes, such as the TM, UM and AM, as mentioned above. The RLC layer rarely performs a function in the TM, and thus UM and AM will only be described herein. The UM RLC adds a protocol data unit (PDU) header including a sequence number (SN) to each PDU for transmission, such that a receiver can know which PDU has been lost during transmission. Due to such functionality, the UM RLC manages, in the user plane, the transmission of multimedia data or the transmission of real-time packet data, such as voice (e.g., VoIP) or streaming in a packet service domain (hereinafter, referred to as a PS domain), while managing, in the control plane, the transmission of an RRC message, which does not need a reception acknowledgement, among RRC messages sent to a specific terminal or specific terminal group within a cell.

Similarly, the AM RLC constructs a PDU by adding a PDU header including an SN upon the construction of the PDU. Unlike the UM RLC, a receiver acknowledges a PDU sent by a transmitter. The receiver acknowledges in order to request a retransmission of the unsuccessfully received PDU from the transmitter. Such retransmission functionality is the most important characteristic of the AM RLC. Thus, the AM RLC aims to guarantee error-free data transmission via the retransmission. For the purpose, the AM RLC usually manages a non-real-time packet data transmission, such as TCP/IP of PS domain, in the user plane, while managing transmission of the RRC message, which requires a reception acknowledgement, among RRC messages transmitted to a specific terminal within a cell in the control plane.

The UM RLC is used for uni-directional communication, while the AM RLC is used for a bi-directional communication due to feedback from a receiver. From the structural perspective, there is a difference, namely, the UM RLC is configured such that one RLC entity performs transmission or reception while the AM RLC is configured such that both transmitter and receiver exist in one RLC entity. The complicated configuration of the AM RLC is due to the retransmission. The AM RLC includes a retransmission buffer for managing the retransmission, in addition to a transmission/reception buffer. Also, the AM RLC performs various functions, such as using transmitting and receiving windows for flow control, polling for a transmitter to request status information from a receiver of an RLC entity, sending a status report for a receiver to report its buffer state to a transmitter of a peer RLC entity, constructing a status PDU for delivering status information, and the like, wherein the protocol is defined between peer AM RLC entities that might reside in an access device and a UE. Each peer RLC entity has a receiver and a transmitter. In addition, the AM RLC also needs various protocol parameters, such as status variables and a timer, in order to support the functions. A PDU, such as status report or status PDU, which is used for controlling the data transmission in the AM RLC, is referred to as "Control PDU", and a PDU used for transferring user data is referred to as "Data PDU". An RLC data PDU in the AM RLC may be divided into PDU and a PDU segment. The PDU segment has part of data included in the PDU. In the LTE system, a maximum size of a data block is changeable every time a terminal sends the data block. Hence, after a transmitter constructs a 200-byte PDU at a specific time and transmits the constructed PDU, when the transmitter receives NACK from a receiver and thereby tries to retransmit the PDU, if the maximum size of the data block to be actually transmittable is 100 bytes, the same PDU cannot be sent as it is. In this case, the PDU segment is used. The PDU segment denotes that the corresponding PDU is segmented into smaller units. During the procedure, the transmitter divides the PDU into the PDU segments and transmits the PDU segments over several transmission time intervals. The receiver then restores the PDU from the received PDU segments.

If there is unsuccessfully (incompletely or incorrectly) received data, the receiver requests a retransmission of such data from the transmitter, which is referred to as a "status report". The status report is one of the control PDUs.

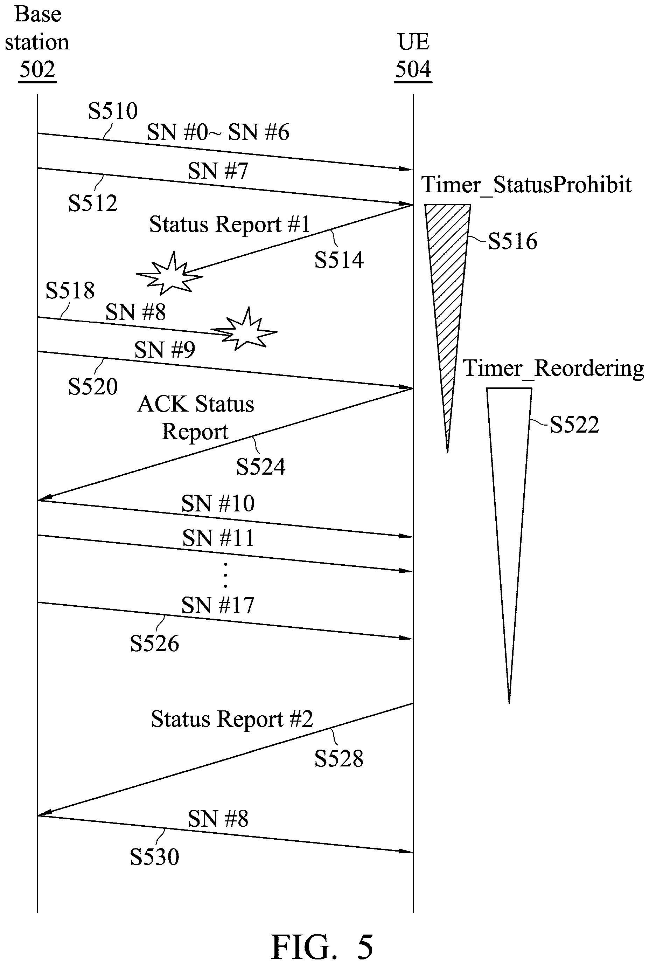

FIG. 5 is schematic diagram illustrating a method for triggering an acknowledgement status report according to an embodiment of the invention. As shown in FIG. 5, a base station 502 transmits at least one protocol data unit (PDU) to a User Equipment (UE) 504. When the UE 504 receives the PDU with SN #7 including a poll bit (S512), the UE 504 transmits a status report #1 with an acknowledgement sequence number (ACK_SN) #8 to base station 502 (S514) and triggers a status prohibiting timer (Timer_StatusProhibit) (S516). Since the status report #1 is missed (S516), the base station 502 continues transmitting the PDU with SN #8 (S518) and the PDU with SN #9 (S520). However, the PDU with SN #8 is also missed (S518). Therefore, the UE 504 triggers a reordering timer (Timer_Reordering) (S522) when detecting that the received PDUs do not arrive in order. In the embodiment, the UE 504 further triggers an ACK status report (S524) when a condition is met no matter whether the reordering timer is running or the status prohibit timer is running, wherein the condition is met when the number of the received PDUs reaches a predefined threshold, an event occurs and so on. It should be noted that the ACK status report only indicates a maximum acknowledgement sequence number ACK_LSN, wherein the ACK_LSN represents the sequence number following the received PDU with the highest sequence number. For example, in this case, the ACK_LSN is 8. Then, when the base station 502 receives the ACK status report with the ACK_LSN #8, the base station 502 transmits the PDUs with from SN #10∼SN #17 (S526). Next, when the reordering timer is time-out or stopped, the UE 504 may transmit the status report #2 with SN #8 (S528). After the base station 502 receives the status report #2 with SN #8, the base station 502 transmits the PDU with SN #8 (S530). However, it should be noted that it is illustrated only for convenience of explanation and there is no time gap therebetween.

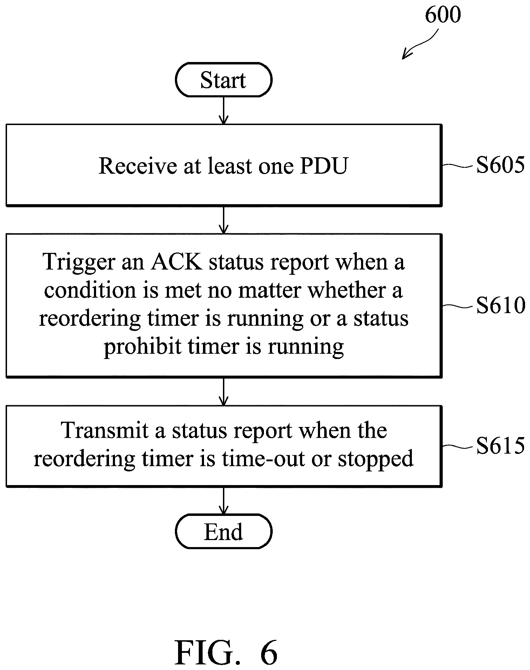

FIG. 6 is a flow diagram illustrating a method 600 for triggering an acknowledgement status report according to an embodiment of the present invention. It should be noted that the method is performed by a UE. First, in step S605, the UE receives at least one protocol data unit (PDU). Then, in step S610, the UE triggers an ACK status report when a condition is met no matter whether a reordering timer is running or a status prohibit timer is running, wherein the ACK status report indicates a maximum acknowledgement sequence number ACK_LSN and the ACK_LSN represents the sequence number following the received PDU with the highest sequence number. Finally, in step S615, the UE transmits a status report when the reordering timer is time-out or stopped.

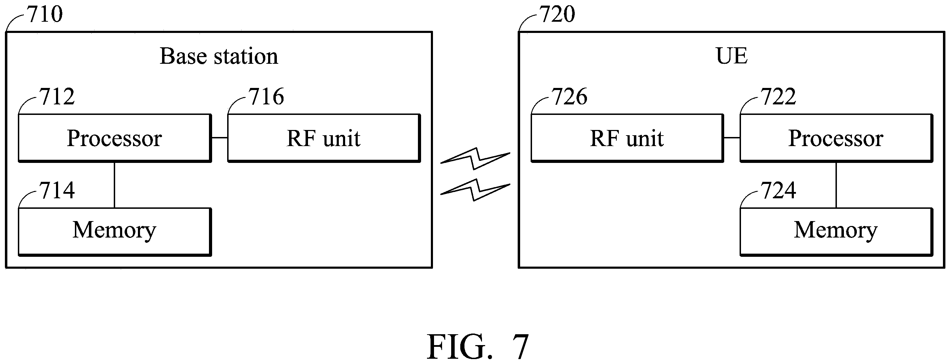

FIG. 7 is a block diagram illustrating a wireless communications system to implement an embodiment of the present invention. A base station 710 may include a processor 712, a memory 714 and a radio frequency (RF) unit 716. The processor 712 may be configured to implement proposed functions, procedures and/or methods described in this description. Layers of the radio interface protocol may be implemented in the processor 712. The memory 714 is operatively coupled with the processor 712 and stores a variety of information to operate the processor 712. The RF unit 716 is operatively coupled with the processor 712, and transmits and/or receives a radio signal. A UE 720 may include a processor 722, a memory 724 and a RF unit 726. The processor 722 may be configured to implement proposed functions, procedures and/or methods described in this description. The memory 724 is operatively coupled with the processor 722 and stores a variety of information to operate the processor 722. The RF unit 726 is operatively coupled with the processor 722, and transmits and/or receives a radio signal.

The methods and apparatus trigger the ACK status report to indicate a maximum acknowledgement sequence number ACK_LSN no matter whether the reordering timer or the status prohibit timer is running, thereby efficiently avoiding the problem that the transmission speed of PDUs is relatively low in the condition that a window stalls due to being filled up by retransmitting a packet in the related art, implement that the transmission of the PDUs can be performed in time in the condition of various data transmission window status, and improve the transmission speed and efficiency of the PDUs.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using another structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those with skill in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those with skill in the art will further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention as defined by the claims. In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope
of the present invention as defined by the claims. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such that the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

## Claims

1. A method for triggering an acknowledgement status report, comprising:
receiving (512) at least one protocol data unit, PDU;
triggering (516) a status prohibit timer when transmitting a first status report (514);
triggering (522) a reordering timer when detecting that the received PDUs do not arrive in order, and
transmitting (528) a second status report when the reordering timer is time-out or stopped,
**characterized in that** said method further comprising
triggering (524) an acknowledgement, ACK, status report when a condition is met no matter whether the reordering timer is running or the status prohibit timer is running,
wherein the condition is met when the number of the received PDUs reaches a predefined threshold, and
wherein the ACK status report indicates a maximum acknowledgement sequence number ACK_LSN, and the ACK_LSN represents the sequence number following the received PDU with the highest sequence number.

2. The method for triggering an acknowledgement status report as claimed in claim 1, further comprising:
receiving (526) the following PDUs after triggering the ACK status report even if the reordering timer is running and the status prohibit timer is running.

3. The method for triggering an acknowledgement status report as claimed in any of the preceding claims, the method is applied to the third generation Long Term Evolution, LTE, mobile communications system.

4. An apparatus (720) for triggering an acknowledgement status report, comprising:
a radio frequency, RF, unit (726) for receiving and transmitting a radio signal; and
a processor (722) operatively coupled with the RF unit, having a radio link control, RLC, entity and is configured to:
receiving at least one protocol data unit, PDU;
triggering a status prohibit timer when transmitting a first status report;
triggering a reordering timer when detecting that the received PDUs do not arrive in order, and
transmitting a second status report when the reordering timer is time-out or stopped,
**characterized in that** said processor is further configured to:
triggering the acknowledgement, ACK, status report when a condition is met no matter whether the reordering timer is running or the status prohibit timer is running,
wherein the condition is met when the number of the received PDUs reaches a predefined threshold, and
wherein the ACK status report indicates a maximum acknowledgement sequence number ACK_LSN, and the ACK_LSN represents the sequence number following the received PDU with the highest sequence number.

5. The apparatus for triggering an acknowledgement status report as claimed in claim 5, said processor is further configured to:
receive the following PDUs after triggering the ACK status report even if the reordering timer is running and the status prohibit timer is running.

6. The apparatus for triggering an acknowledgement status report as claimed in any of claims 4 to 5, the apparatus is applied in the third generation Long Term Evolution, LTE, mobile communications system.

7. A non-transitory computer-readable medium comprising a computer program comprising computer program code means configured to cause a processor to execute a method for triggering an acknowledgement status report as claimed in any of claims 1 to 3, if loaded into the processor.

## Patentansprüche

1. Verfahren zum Auslösen eines Bestätigungsstatusberichts, umfassend:
Empfangen (512) von mindestens einer Protokolldateneinheit, PDU;
Auslösen (516) eines Statusverbot-Zeitsignals beim Senden eines ersten Statusberichts (514);
Auslösen (522) eines Umordnungs-Zeitsignals, wenn festgestellt wird, dass die empfangenen PDUs nicht in der richtigen Reihenfolge ankommen, und
Senden (528) eines zweiten Statusberichts, wenn das Umordnungs-Zeitsignal abgelaufen oder gestoppt ist,
**dadurch gekennzeichnet, dass** das Verfahren weiterhin umfasst:
Auslösen (524) einer Bestätigungs-Statusmeldung, ACK, wenn eine Bedingung erfüllt ist, unabhängig davon, ob das Umordnungs-Zeitsignal noch läuft oder das Statusverbot-Zeitsignal noch läuft,
wobei die Bedingung erfüllt ist, wenn die Anzahl der empfangenen PDUs einen vordefinierten Schwellenwert erreicht, und
wobei die ACK-Statusmeldung eine maximale Bestätigungs-Sequenznummer ACK_LSN angibt und die ACK_LSN die Sequenznummer darstellt, die der empfangenen PDU mit der höchsten Sequenznummer folgt.

2. Verfahren zum Auslösen eines Bestätigungsstatusberichts nach Anspruch 1, wobei das Verfahren weiterhin umfasst:
Empfangen (526) der nachfolgenden PDUs nach Auslösen des ACK-Statusberichts, auch wenn das Umordnungs-Zeitsignal noch läuft und das Statusverbot-Zeitsignal noch läuft.

3. Verfahren zum Auslösen eines Bestätigungsstatusberichtsnach einem der vorhergehenden Ansprüche, wobei das Verfahren auf ein Long Term Evolution, LTE, Mobilfunksystem der dritten Generation angewendet wird.

4. Vorrichtung (720) zum Auslösen eines Bestätigungsstatusberichts, umfassend:
eine Funksignaleinheit, RF (726) zum Empfangen und Senden eines Funksignals; und einen Prozessor (722), der operativ mit der RF-Einheit gekoppelt ist, die eine Funkverbindungssteuerungseinheit, RLC, aufweist und ausgelegt ist, um die folgenden Schritte auszuführen:
Empfangen (512) von mindestens einer Protokolldateneinheit, PDU;
Auslösen (516) eines Statusverbot-Zeitsignals beim Senden eines ersten Statusberichts (514);
Auslösen (522) eines Umordnungs-Zeitsignals, wenn festgestellt wird, dass die empfangenen PDUs nicht in der richtigen Reihenfolge ankommen, und
Senden (528) eines zweiten Statusberichts, wenn das Umordnungs-Zeitsignal abgelaufen oder gestoppt ist,
**dadurch gekennzeichnet, dass** der Prozessor weiterhin ausgelegt ist für ein:
Auslösen (524) einer Bestätigungs-Statusmeldung, ACK, wenn eine Bedingung erfüllt ist, unabhängig davon, ob das Umordnungs-Zeitsignal noch läuft oder das Statusverbot-Zeitsignal noch läuft,
wobei die Bedingung erfüllt ist, wenn die Anzahl der empfangenen PDUs einen vordefinierten Schwellenwert erreicht, und
wobei die ACK-Statusmeldung eine maximale Bestätigungs-Sequenznummer ACK_LSN angibt und die ACK_LSN die Sequenznummer darstellt, die der empfangenen PDU mit der höchsten Sequenznummer folgt.

5. Vorrichtung zum Auslösen eines Bestätigungsstatusberichts nach Anspruch 5, wobei der Prozessor weiterhin ausgelegt ist:
um die nachfolgenden PDUs nach Auslösen des ACK-Statusberichts zu empfangen, auch wenn das Umordnungs-Zeitsignal noch läuft und das Statusverbot-Zeitsignal noch läuft.

6. Vorrichtung zum Auslösen eines Bestätigungsstatusberichts nach einem der Ansprüche 4 bis 5, wobei die Vorrichtung auf ein Long Term Evolution, LTE, Mobilfunksystem der dritten Generation angewendet wird.

7. Nicht-flüchtiges, computerlesbares Medium mit einem Computerprogramm, das Computerprogrammcodemittel umfasst, die so ausgelegt sind um zu bewirken, dass ein Prozessor ein Verfahren zum Auslösen eines Bestätigungsstatusberichts nach einem der Ansprüche 1 bis 3 ausführt, wenn diese in den Prozessor geladen werden.

## Revendications

1. Un procédé de déclenchement d'un rapport d'état d'accusé de réception, comprenant:
la réception (512) d'au moins une unité de données de protocole, PDU;
le déclenchement (516) d'un temporisateur d'interdiction d'état lors de la transmission d'un premier rapport d'état (514) ;
le déclenchement (522) d'un temporisateur de réarrangement lors de la détection que les PDUs reçus ne parviennent pas de manière ordonnée ; et
la transmission (528) d'un second rapport d'état lorsque le temporisateur de réarrangement est expiré ou arrêté,
**caractérisé en ce que** le procédé comporte en outre :
le déclenchement (524) d'un rapport d'état d'accusé de réception, ACK, lorsqu'une condition est remplie indépendamment de l'exécution du temporisateur de réarrangement ou du temporisateur d'interdiction d'état ;
dans lequel la condition est remplie lorsque le nombre de PDUs reçus atteint un seuil prédéterminé, et
dans lequel le rapport d'état d'accusé de réception indique un numéro de séquence d'accusé de réception maximal ACK_LSN, et que le ACK_LSN représente le numéro de séquence suivant le PDU reçu avec le numéro de séquence le plus élevé.

2. Le procédé de déclenchement d'un rapport d'état d'accusé de réception tel que revendiqué dans la revendication 1, comprenant en outre
la réception (526) des PDU suivants après le déclenchement du rapport d'état ACK même si le temporisateur de réarrangement et le temporisateur d'interdiction d'état sont en cours d'exécution.

3. Le procédé de déclenchement d'un rapport d'état d'accusé de réception tel que revendiqué dans l'une quelconque des revendication précédentes, le procédé étant appliqué au système de communications mobiles de la troisième génération *Long Term Evolution*, LTE.

4. Un dispositif de déclenchement (720) d'un rapport d'état d'accusé de réception, comprenant:
une unité de radiofréquence (726), RF, pour recevoir et émettre un signal radio; et
un processeur (722) couplé fonctionnellement à l'unité RF, ayant une entité de commande de liaison radio, RLC, et configuré pour:
recevoir au moins une unité de données de protocole, PDU ;
déclencher un temporisateur d'interdiction d'état lors de la transmission d'un premier rapport d'état;
déclencher un temporisateur de réarrangement lors de la détection que les PDUs reçus ne parviennent pas de manière ordonnée ; et
la transmission d'un second rapport d'état lorsque le temporisateur de réarrangement est expiré ou arrêté,
**caractérisé en ce que** ledit processeur est en outre configuré pour :
déclencher le rapport d'état d'accusé de réception, ACK, lorsqu'une condition est remplie indépendamment de l'exécution du temporisateur de réarrangement ou du temporisateur d'interdiction d'état ;
dans lequel la condition est remplie lorsque le nombre de PDUs reçus atteint un seuil prédéterminé, et
dans lequel le rapport d'état d'accusé de réception indique un numéro de séquence d'accusé de réception maximal ACK_LSN, et que le ACK_LSN représente le numéro de séquence suivant le PDU reçu avec le numéro de séquence le plus élevé.

5. Le dispositif de déclenchement d'un rapport d'état d'accusé de réception tel que revendiqué dans la revendication 5, ledit processeur étant en outre configuré pour :
recevoir les PDUs suivants à la suite du déclenchement du rapport d'état ACK même lors de l'exécution du temporisateur de réarrangement et du temporisateur d'interdiction d'état.

6. Le dispositif de déclenchement d'un rapport d'état d'accusé de réception tel que revendiqué dans l'une quelconque des revendications 4 à 5, le dispositif étant appliqué à un système de communications mobiles de la troisième génération *Long Term Evolution*, LTE.

7. Un support lisible par ordinateur non transitoire comprenant un programme d'ordinateur comportant des moyens de codage d'instructions d'ordinateur configurés pour amener un processeur à exécuter un procédé de déclenchement d'un rapport d'état d'accusé de réception tel que revendiqué dans l'une quelconque des revendications 1 à 3, lorsque chargés dans le processeur.
